(19) Europäisches Patentamt
European Patent Office
Office européen des brevets

(11) **EP 4 686 883 A1**

(12) **EUROPEAN PATENT APPLICATION**

(43) Date of publication:
**04.02.2026  Bulletin 2026/06**

(21) Application number: **24192528.8**

(22) Date of filing: **02.08.2024**

(51) International Patent Classification (IPC):
*F24D 19/10* (2006.01)    *F24H 1/18* (2022.01)
*F24H 4/04* (2006.01)    *G05B 9/03* (2006.01)
*G05B 15/02* (2006.01)    *G05D 23/19* (2006.01)
*H01H 47/00* (2006.01)

(52) Cooperative Patent Classification (CPC):
**F24D 19/10; F24D 19/1039; G05B 15/02;**
**G05D 23/1917;** F24D 2200/08; F24D 2200/123;
F24D 2220/042; F24D 2220/044; F24H 1/185;
F24H 4/04; F24H 15/443; H01H 47/002

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**GE KH MA MD TN**

(71) Applicant: **BDR Thermea Group B.V.**
**7332 BD Apeldoorn (NL)**

(72) Inventor: **MASSEIN, Aurélien**
**7332 BD Apeldoorn (NL)**

(74) Representative: **Grabovac, Dalibor**
**AAP Patentanwaltskanzlei Grabovac**
**Pfeivestlstr. 12**
**81243 München (DE)**

(54) **CONTROL SYSTEM FOR CONTROLLING AT LEAST ONE THERMAL INSTALLATION AND THERMAL INSTALLATION COMPRISING SUCH A CONTROL SYSTEM**

(57)    The present invention relates to a control system (10) for controlling at least one thermal installation (12), the control system (10) comprising a determination device (14), in particular a sensor, configured for determining at least one parameter (P) relating to the thermal installation (12), wherein the control system (10) comprises a plurality of controllers (18), each controller of the plurality of controllers (18) configured to control the thermal installation (12), the plurality of controllers (18) including at least a first controller (20) and at least a second controller (22), and a selection module (24) configured to enable a controller from the plurality of controllers (18) and/or select and set active a controller from the plurality of controllers (18) to control the thermal installation (12) or of a part thereof. Moreover, the present invention relates to a thermal installation (12) that can be operated by such a control system (10).

Fig.1

**Description**

The present disclosure relates to a control system for controlling at least one thermal installation and to a thermal installation comprising such a control system.

Heating or cooling of water in buildings, such as heating or cooling water of a central heating and/or cooling system or heating of water for domestic use, may be accomplished by means of water heating and/or cooling installations including a heat pump or heat pump system. Such a water heating and/or cooling installation can also be called a thermal installation. Such a heat pump system may either be a water source, usually ground source to water heat pump (GSHP) system or an air source to water heat pump (AWHP) system. In a GSHP system, calories are exchanged between the ground and the water. The calories in the ground may be extracted by capturing calories in a water table or by circulating a water-based circuit in the ground or from any suitable water source. In an AWHP system calories are exchanged between the air and the water. The water to which the calories withdrawn from the water, or the air is transferred to water which is typically located in a water circuit and/or a water tank. Such a heat pump system can also comprise a reversible heat pump and or be a reversible heat pump system, wherein the reversible heat pump or heat pump system allows for heating and/or cooling, e.g. by way of floor cooling. In other words, a reversible heat pump system can both heat and cool a space by interchanging the role of each heat exchanger. The thermal installation can comprise at least one heat pump or heat pump system and/or an electrical backup heater and/or a gas heating device, and/or a wood-based heating device and/or any other suitable heating and/or cooling device, such as a PV module or the like.

Such thermal installations need to be controlled and are thus equipped with a control system. Just as an example of one control task, the temperature of the water inside the water tank, or of the water inside a primary or secondary or any further circuit of the thermal installation for domestic hot water, or for heating or cooling of a building, dwelling or space, can be determined by a respective internal temperature sensor and the temperature outside the water tank, can be determined by an external temperature sensor and/or or online temperature data, the values received by the respective temperature sensor are interpreted with reference to

a) a heating or cooling demand or domestic water heating demand and/or
b) which heating or cooling device, in other words thermal device, to use and how many calories to ask from the respective heating or cooling device to deliver the heating or cooling demand.

Control systems are typically equipped with only one general controller. This one general controller has to process information received from multiple sensors which leads to a relatively high complexity for just one controller which reduces the robustness, performance and reliability of this one general controller. In addition, the complexity of the control tasks is constantly increasing such that also the risk of bugging or errors such as giving false values, malfunctioning, or no longer working, is increasing. Bugging or errors may lead to reduced performance up to malfunction of the heating and/or cooling device which may cause for example energy overconsumption and/or thermal discomfort for the user.

It is an object of the present invention to provide a thermal installation, also referred to in this application as a water heating and/or cooling installation, which has an optimized response, robustness, performance and improved reliability regarding the increasing complexity of tasks of the thermal installation. In particular, the reliability of control systems of the thermal installations should be increased thereby reducing or preferably avoiding energy overconsumption and/or thermal discomfort for the user. Furthermore, it is an object of the present invention to provide a water heating and/or cooling installation that can be operated by such a control system.

The object is solved by the features specified in claims 1 and 13. Advantageous embodiments are the subject of the dependent claims and are described herein.

According to one aspect of the present invention the control system for controlling at least one thermal installation comprises

- a determination device, in particular a sensor, configured for determining at least one parameter relating to the thermal installation, wherein the control system comprises
- a plurality of controllers, each controller of the plurality of controllers configured to control the thermal installation, the plurality of controllers including

    o at least a first controller and at least a second controller, and
    o a selection module configured to enable a controller from the plurality of controllers and/or select and set active a controller from the plurality of controllers to control the thermal installation or a part thereof.

The use of at least two controllers in the control system provides a certain redundancy. In case the first controller does not work properly anymore, the selection module can select and set active the second controller.

An active controller controls the thermal installation or a part of the thermal installation, in particular a task and/or a process and/or function of the thermal installation.

Controlling the thermal installation or a part thereof can for example mean to alter the behavior of the thermal installation or of a part thereof, such as the behavior of a heat pump of the thermal installation. Controlling can comprise for example starting the compressor, actioning a valve, using a backup heater, in particular any task related to operating the thermal installation or a part thereof, in particular fulfilling a heat and/or cooling demand.

Enabled within the meaning of this application therefore has the meaning that out of the plurality of controllers, the controller or set of controllers are switched on to learn and/or monitor and/or process data. Thus, an enabled controller can be switched on for learning, for example learning the behavior of the user over time but is disabled for controlling the thermal installation or of a part thereof.

Moreover, the first controller and the second controller may be different at least with respect to their performance. In some cases, a controller offering a better performance may only work properly in a smaller operating range. In the introducing part of this application text, the two control tasks a) and b) were defined. The first controller may be better suited for task a) while the second controller may be better suited for task b). While the first controller and the second controller may both be able to fulfil the tasks a) and b) they may do so differently and not with the same level of quality, performance, operating range and the like. Moreover, the at least first and the second controller can be active at the same time, however, each respective task is only controlled by one of the first or the second controller at any time.

Within the application, the feature that "the selection module is configured to select and set active a controller from the plurality of controllers to control the thermal installation" means that the selection module sets active the selected controller out of the plurality of controllers to perform a predefined control task, such as task a) or task b). There is only one active controller performing said control task at any given time. In other words, the first and the second controller cannot perform the same control task at the same time.

Therefore, when the respective controller is not active, said controller cannot act on the control of the thermal installation, such as heating of the domestic water or central heating or cooling. In other words, the selection module recognizes and/or ensures that any inactive controller is not currently performing any tasks or functions that can control the thermal installation. However, any controller can be enabled to perform any tasks or functions that do not control the thermal installation, such as learning the behavior of the user over time and/or learning how to control thermal installation, in particular control the thermal installation efficiently, over time. Any controller from the plurality of controllers can be enabled in a learning mode and/or monitoring mode and/or data processing mode. Only one controller can be active for any given control task, at any given time, but several controllers can be enabled at the same time. Thus, an enabled controller or an enabled set of controllers refers to a controller or set of controllers out of the plurality of controllers, which are enabled for at least a learning mode and/or a monitoring mode and/or a data processing mode, by the selection module or through the selection module, in case the selection module is actioned by the user.

In another embodiment, one controller, for example the first controller, can be active and one other controller, for example the second controller, can be inactive.

In another embodiment one controller, for example the first controller, can be active and the other controller, for example the second controller, can be inactive and enabled. The first controller can for example control the heating and/or cooling installation and the second controller can be enabled by the selection module in a learning mode. So, the second controller can learn to control the heating and/or cooling installation or parts thereof, such as taking over specific tasks and/or processes.

In another embodiment one controller, for example the first controller, can be active and enabled and the other controller, for example the second controller, can be inactive. So, as an example an active controller can also be an enabled controller which can run a learning mode and/or a monitoring mode and/or a data processing mode. The data processing mode can for example be related to data for the active controller and/or can be related to data processing for a set of controllers of the plurality of controllers different from the active controller or including the active controller. The learning mode can be related to a process and/or a task and/or a controller. The learning mode can depend on data processing. The monitoring mode can be related to a process and/or a task and/or a controller. The monitoring mode can also depend on data processing and/or learning.

In another embodiment one controller, for example the first controller, can be active and enabled and the other controller, for example the second controller, can be inactive and enabled.

In an embodiment, the at least first controller can be a standard controller for predefined basic tasks, wherein such a more standard controller can be more reliable and/or energy efficient, the second controller can be a more advanced controller which offers a better performance but may also need additional information to operate compared to the first controller. The second controller can be chosen for performing predefined complex tasks of the thermal installation when a predefined satisfying condition for such a complex task is met. The first controller can be chosen to provide the less demanding or basic tasks which require less information and/or energy and where the satisfying condition for the more complex tasks is not met.

Thus, in other words, the control system according to the invention allows for the control system to allocate tasks to the respective controller better suited for the respective task based on the complexity of the task and allows to switch between e.g. a more advanced controller for a complex task requiring e.g. more information for performing the task and a less demanding, or standard controller can be chosen if a less demanding task can be performed by the less demanding controller.

The selection module may be a separate hardware component; however, it may be implemented by software that can be executed on the control system. Also, the selection module can be on the same hardware or in a different software or hardware as the first controller and the second controller. Remote control in the cloud or in another devices or boards can thereby be implemented. The components of the control system can be hardware, software, virtual, distributed, cloud-based, etc.

Within this application, a set of controllers refers to two or more controllers out of the plurality of controllers of the control system.

The operating range of a controller depends on the quality and quantity of the measurement and the information needed to be treated. According to the invention, a step to determine/decide if the controller is able to function, or is operational, is conducted. It is understood in the application that the term "the controller is able to function or is operational" means that the controller is properly set up and can handle incoming requests and provide appropriate responses, any hardware component is connected and recognized by the respective control system, or the controller, or the set of controllers, and the correct hardware can interact with the software the respective controller is designated to control. The functionality can be determined based on the determination whether the controller is inside its operating range. Thanks to this determination step, the control system will allow to switch to the best controller for which predefined satisfying conditions and/or activation conditions are met. The operating range of a controller pre-defines in which circumstances the controller is designed or defined to operate and control the thermal installation.

Examples of parameters that can be determined may be parameters of function, and/or physical parameters of the thermal installation. For example, these parameters suitably include, but are not limited to, a source, destination or refrigerant fluid temperature or pressure, a flow rate (i.e. the rate at which the heating medium (e.g., water, air) circulates through the thermal installation), the energy and/or information and/or operating state of the system, any further system characteristics, such as setpoint temperature, actual temperature, e.g. of the medium or space to be heated and/or cooled, energy consumption, heat output and/or the instantaneous or consumed power of the compressor.

In case the first controller and the second controller are different with respect to the performance of the tasks they have to fulfill, the selection module may assign the task a) to the first controller and task b) to the second controller. As a result, the reliability and the performance, such as for example realized energy savings, thermal comfort, heating time profiles and/or the Coefficient of Performance (COP), of the thermal installation operated by the control system, as well as the reliability and the performance of the control system itself are efficiently improved. The COP is a measure of the efficiency of heating and/or cooling installations, such as heat pump systems. The COP is the ratio of useful heating or cooling thermal energy delivered compared to the energy consumed.

Mathematically, it can be expressed as:

$$COP = \frac{Q}{W}$$

where:

(Q) is the useful heat supplied or removed by the thermal installation.

(W) is the work input required by the thermal installation.

According to another embodiment the control system comprises a memory configured to record the determined parameter over time. The term memory is often synonymous with the terms RAM, main memory, or primary storage. The recording of the determined parameters over time can be used to identify certain patterns e.g., in the heating demand. As an example, a high heating demand may be recorded in the morning hours of workdays between 6:00h and 7:00h. The control system may anticipate such heating demands and thus find an optimal way how to fulfill the heating demand with minimum energy consumption.

In a further embodiment the selection module is configured to determine a set of activable controllers from the plurality of controllers, based, at least in part, on the determined parameter and/or the recorded determined parameter over time. An activable controller refers to a controller or a set of controllers out of the plurality of controllers where at least one predefined activation condition is fulfilled. Alternatively or additionally, the selection module can enable a controller from the plurality of controllers to be in a learning mode and/or a monitoring mode and/or a data processing mode.

As initially explained, some of the controllers may be better suited for one specific task than others. Moreover, parameter use of the control system can be optimized over time based on for example on specific patterns or based on more data being available overtime. For example, the heating demand profile may be better identifiable over time. The optimal way how to fulfill the heating demand with minimum energy consumption may include certain control tasks for which a certain controller is better suited than another. For example, the control system might learn to use a function that takes the setpoint temperature, the actual temperature, and the flow rate as parameters and their development over time to adjust the heat output and maintain the desired temperature efficiently as an optimization task. In this embodiment, the selection module may determine a set of controllers from the plurality of controllers that may be used for the particular control task.

In another embodiment the set of activable controllers includes at least the first controller. The first controller may be a standard controller that is set active by default. The first controller may be the most reliable controller of the control system, albeit not necessarily the one of the highest performance for a particular task. Moreover, a robust and degraded-mode second controller can operate in a large operating range, larger than and/or encompassing the operating range of the first controller. The second controller can be activable, but it is not set active by default.

A further embodiment requires that the selection module is configured to select the controller to be active from the set of activable controllers. As mentioned, the selection module may first determine a set of activable controllers from the plurality of controllers. At a later stage, which may begin considerably later, one controller out of the activable controllers is then set active by the selection module. The reaction time can be kept short; for example within seconds.

According to another embodiment the selection module is configured to select the controller to be active based, at least in part,

- on a preference and/or
- on a predicted performance measure of the thermal installation when using the selected controller.

In this embodiment the controller that optimally performs a given task can be active based on relevant parameters, with the aim of improving the performance such as thermal comfort and energy savings, and/or stability and robustness of the control and comprehensible criteria which are transparent, clear and can be easy to understand for the user and/or an installer.

Moreover, a controller or a set of controllers can be selected and set active by the user through the selection module. For example, by setting a high preference to the respective controller available, the selection module will set the respective controller active if activable else once possible, i.e. as once the respective controller is set to activable and has the highest preference and/or highest performance out of the available set of controllers. The selection module sets the respective controller active, if the respective controller is available and activable and is most preferred and/or most performant, which means that the selection module sets the respective controller to be the one controlling the thermal installation or a process or task of the heating and/or cooling installation.

According to another embodiment the selection module is configured to determine the set of activable controllers based, at least in part, on determining whether the parameter and/or the recorded determined parameter over time meets an activation condition of a controller to be included in the set of activable controllers. In this embodiment activation conditions are defined. The parameter and/or the recorded determined parameter over time is then analyzed with respect to the activation conditions. Only if the activation conditions are met, the respective controller can be selected and set active. The activation is conducted based on determinable conditions. Suitable parameters can include for example sensor measurements, calculation results, predefined software states and/or variables, data received from the heating and/or cooling installation and/or from external sources.

In a further embodiment the first controller is set active when the thermal installation is started. In this embodiment, the first controller is set active by default unless and until the selection module selects another controller. Thus, it is ensured that the thermal installation is controlled by at least one controller without the need to first select one controller when the thermal installation is started. The first controller can for example be a standard controller, to further ensure that the less demanding controller is chosen by default and the selection module can select e.g. the second controller as a more advanced controller, in case the predefined satisfying conditions of the control system are met for a complex task, thereby further optimizing the control system performance Alternatively or additionally, the first controller is set active and the second controller is inactive. Alternatively or additionally, the first controller is set active and the second controller is inactive and enabled. Alternatively or additionally, the first controller is set active and enabled and the second controller is inactive. Alternatively or additionally, the first controller is set active and enabled and the second controller is inactive and enabled.

In another embodiment the selection module is configured to select and set active a controller from the plurality of activable controllers when

- a predetermined period of time has lapsed since the thermal installation was started; and/or
- a predetermined period of time has lapsed since setting active and/or enabling a controller; and/or
- the activation condition of the active controller is no longer met; and/or
- the preference has changed; and/or
- a re-selection of the active controller is requested; and/or
- a predetermined trigger event occurs; and/or

the selection module is configured to determine the set of activable controllers from the plurality of controllers when

- a predetermined period of time has lapsed since the thermal installation was started,
- a predetermined period of time has lapsed since determining the activable controller; and/or
- the activation condition of the controller is no longer met; and/or

- a predetermined trigger event occurs; and/or
- a re-determination of the activable controllers is requested.

The mentioned criteria can be used to decide which controller from the plurality of activable controllers should be active. These criteria are based on preferences and performance predictions and allow for efficient and easy implementation and allow for performance optimization of the control system and/or the thermal installation.

A further embodiment defines that the selection module comprises two sub-modules,

- a first sub-module configured to select and set active a controller from the plurality of activable controllers and/or configured to enable a controller from the plurality of controllers, and
- a second sub-module configured to determine the set of activable controllers from the plurality of controllers.

The selection module is subdivided into a first sub-module and a second sub-module which have different tasks. While the second sub-module determines the set of activable controllers, the first sub-module selects and set active a controller from the plurality of activable controllers. Each sub-module can fulfill the particular task independently from the other one. The performance and reliability of the selection module is thus improved.

According to another embodiment the selection module is configured to pause the active controller during an override procedure. Override procedures may procedures that are only carried out under specified conditions. An override procedure in this context is for example that in case a pre-defined condition is met, such as in that in the event of emergency or in case of a specific, pre-defined condition or variable value being met, the override procedure allows one critical controller to take precedence. A critical controller is a controller or set of controllers out of the plurality of controllers, which are used to apply an associated override procedure. For example, the pre-defined condition is met when a variable exceeds a safety threshold, or the variable value drops below a predefined performance threshold. In such a case, a pre-defined critical controller takes over control of the respective process variable, overriding the operation of any other controller from the plurality of activable controllers. The critical controller can relinquish control again, e.g. in case the respective pre-defined condition or variable value is within a predetermined range, or safe limit, and the control can return to being regulated by the controller active prior to the override procedure. Such an override procedure allows for maintaining safety and/or improving performance, such as by ensuring that processes remain within pre-defined operational parameters or allowing for efficiency improvement based on variable limits. Override procedures may preferably be a holiday mode, a standby-mode or a boost mode. While the holiday mode and the stand-by mode are mainly defining an inactivity or limit the water heating and/or cooling process, a boost mode triggers and activates the water heating and/or cooling process. Another example of an override procedure may be an anti-legionella mode. The anti-legionella mode suitably comprises a legionella prevention heating mode. The anti-legionella mode can be controlled by a pre-determined controller. The anti-legionella mode can be repeated at pre-determined intervals or can be chosen ad hoc, e.g. by the user. Legionella bacteria are commonly found in water where the bacteria multiply in temperature ranges of between 20 and 45 °C, if sufficient nutrients are available. The bacteria are dormant below 20 °C and do not survive above 60 °C. Legionnaires' disease is a potentially fatal type of pneumonia, contracted by inhaling airborne water droplets containing viable Legionella bacteria. Thus, adequate protective measures need to be put in place to ensure that the risk of Legionella growth is reduced, preferably prevented. The anti-legionella mode can be comprised within a boost mode.

Override procedures usually require the use of special, or critical controllers, outside the scope of the set of activable controllers described above.

In a further embodiment the override procedure is activated by a triggering event, by a request, at predetermined times, and/or at predetermined intervals. These criteria are easy to define and set by the end-user. Alternatively, the triggering event may be factory set or programs which conduct override procedures. Internal or external software could determine to trigger it.

A further aspect of the invention relates to a thermal installation comprising a control system of any one of the preceding embodiments, the thermal installation further comprising at least one heating and/or cooling device, such as a heat pump, in particular reversible heat pump, in particular a heat pump system, in particular a reversible heat pump system, connected to a water distribution system through a water inlet and a water outlet, wherein the determination device comprises at least one temperature, volume, flowrate and/or energy determination device, configured to determine the distributed water temperature at the water inlet and/or at the water outlet and/or the water temperature inside the heating and/or cooling device.

The technical effects and advantages as discussed with regard to the present control system to a large extent equally apply to the thermal installation. Briefly, the use of two controllers in the control system provides a certain redundancy. In case the first controller does not work properly, the selection module can select and set active the second controller. Moreover, the controllers may be of a different design and differ in performance depending on the task they should execute. The control system of the thermal installation can choose the controller that offers the best performance for a specific task. Thus, reliability and performance can be improved.

In another embodiment the at least one heating and/or cooling device comprises

- a thermodynamic heat pump with a variable or fixed-speed compressor, and/or
- an additional heating element comprising an electrical heater and/or
- a heat exchanger in fluid communication with an additional heating and/or cooling system.

Heat pumps transfer heat (and so, calories) from a cold medium to a hot medium. As they transfer rather than generate heat, they are more energy-efficient than other ways of heating or cooling a dwelling or the like. However, under certain conditions, the heat that can be transferred may not be sufficient to fulfill the heat and/or cool demand. In such conditions, a back-up element such as an electrical heater can be used alternatively or in addition to the heat pump. It may also be possible to use an additional heating and/or cooling system that may include a storage tank where a large amount of water of high temperature may be stored. When the heat that can be transferred by the heat pump is not sufficient, heat from the additional heating and/or cooling system can be used. Heat pump systems according to the invention can also comprise reversible heat pumps and/or be reversible heat pump systems, which allow for heating and cooling, e.g. by way of floor cooling. The thermal installation according to the invention can comprise at least one heat pump or heat pump system and/or an electrical backup heater and/or a gas heating and/or cooling device, and/or a wood-based heating device and/or any other suitable heating and/or cooling device, such as a PV module or the like.

A further embodiment defines that the determination device further comprises at least one additional determination device configured to determine a temperature of the distributed water, water flow volume of the distributed water, water energy of the distributed water, physical temperature outside the system, consumed water flow rate of the distributed water, consumed water flow volume of the distributed water, and/or the temperature of water inside of a storage tank in fluid communication with the at least one heating and/or cooling device.

The additional determination device could include air medium, alongside with water especially for heating/cooling (H/C) applications and serves for the determination of the heat source temperature. The additional determination device provides information on the current status of the additional heating element such that it can be decided to transfer calories therefrom.

The present invention is described in detail with reference to the drawings attached wherein

Figure 1    shows an inventive embodiment of a control system for controlling a thermal installation and

Figure 2    a water thermal installation that comprises the control system shown in Figure 1, both figures showing principle drawings.

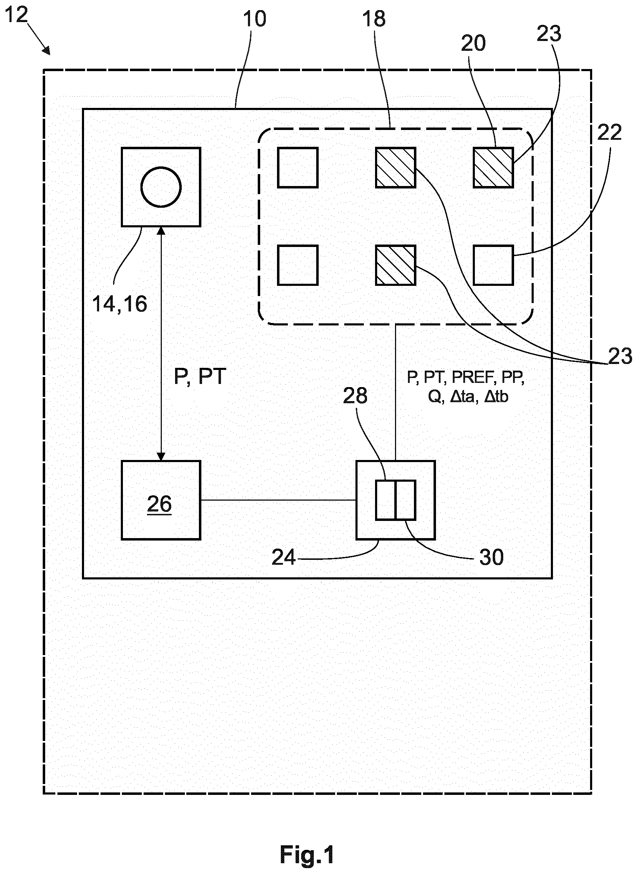

Figure 1 shows an embodiment of a control system 10 according to the present invention which is used for controlling at least one thermal installation (also referred to as a water heating and/or cooling installation) 12 (see also Figure 1). The control system 10 comprises a determination device 14, in particular a sensor 16, configured for determining parameter P relating to the thermal installation 12. Moreover, the control system 10 is equipped with a plurality of controllers 18, each controller of the plurality of controllers 18 configured to control the thermal installation 12. The plurality of controllers 18 includes at least a first controller 20 and at least a second controller 22, and a selection module 24 configured to select and activate a controller from the plurality of controllers 18 to control the thermal installation 12. The selection module 24 is configured to determine a set of activable controllers 23 from the plurality of controllers 18, based, for example, on the determined parameter P and/or the recorded determined parameter over time PT. The first controller 20 is among the activable controllers 23.

The selection module 24 comprises two sub-modules, namely a first sub-module 28 configured to select and set active a controller from the plurality of activable controllers 23 and/or configured to enable a controller from the plurality of controllers 18, and a second sub-module 30 configured to determine the set of activable controllers 23 from the plurality of controllers 18.

Moreover, the control system 10 is provided with a memory 26 configured to record the determined parameter over time PT.

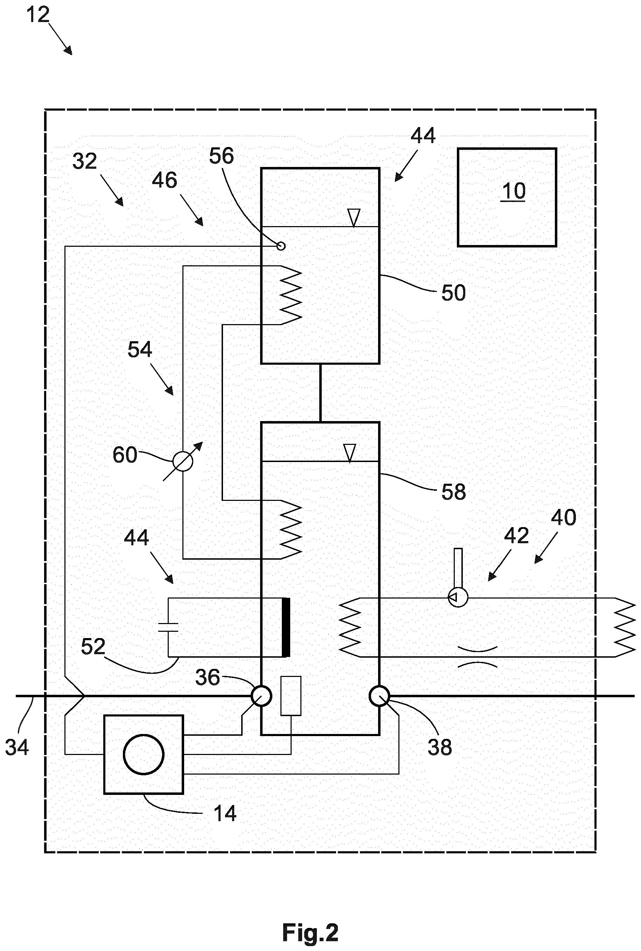

Figure 2 is a principle sketch of a thermal installation 12 that comprises a control system 10 as shown in Figure 1. The thermal installation 12 is equipped with a heating and/or cooling device 32 connected to a water distribution system 34 comprising a water inlet 36 and a water outlet 38 of a water tank 58. The determination device 14 comprises the determination device 14 by which temperature, volume, flowrate and/or energy at the water inlet 36 and/or the water outlet 38 and/or the water temperature inside the water tank 58 can be determined.

The thermal installation 12 also includes a heat pump 40 having a compressor 42 either of variable or fixed speed. The heat pump 40 transfers calories or heat from the exterior of the thermal installation 12 to water stored in the water tank 58.

The thermal installation 12 is further equipped with an additional heating and/or cooling system 46 that includes additional heating element 44 by which the water in the water tank 58 can be heated either in addition or instead of the heat pump 40. The additional heating element 44 may comprise an electrical heater 52 that can interact with the water in the water tank 58.

Beyond that the additional heating and/or cooling system 46 comprises a storage tank 50 where hot water can be stored. A heat exchanger 54 is in fluid communication with the water in the storage tank 50 and the water in the water tank 58. If needed, heat can be transferred from the water in the storage tank 50 to the water in the water tank 58. By means of an additional determination device 56, the temperature or other relevant parameter P of the water in the storage tank 50 can be determined. A pump 60 can be activated to transfer heat from the storage tank 50 to the water tank 58 and vice versa.

The thermal installation 12 can be operated as follows:

With reference to Figure 1, the control system comprises a plurality of controllers 18, among them one first controller 20 and one second controller 22. In the embodiment shown in Figure 1, the plurality of controllers 18 comprises in total six controllers, three of which are activable controllers 23. In Figure 1, the activable controllers 23 are hatched. The selection module 24 selects and sets active the controllers from the plurality of activable controllers 23.

With reference to Figure 2, the temperatures of the water inside the water tank 58, at the water inlet 36 and the water outlet 38 can be determined by the determination device 14. These three temperatures and their change over time may be interpreted with reference to

  a) a water heating and/or cooling demand and/or
  b) if the calories of the water in the water tank 58 are sufficient to satisfy the water heating/cooling demand or if calories from the additional heating/cooling system are needed.

The selection module 24 can now decide which one of the plurality of controllers 18 to use to fulfill the task a) and task b). To this end, the selection module 24 selects and sets active the respective controllers from the plurality of controllers 18. The selection module 24 can additionally enable a controller from the plurality of controllers 18 to learn and/or monitor and/or process data.

The selection and the setting active of the controllers form the plurality of controllers 18 may be done in consideration of whether

- a predetermined period of time Δta has lapsed since the thermal installation 12 was started; and/or
- a predetermined period of time Δtb has lapsed since activating a controller; and/or
- activation condition Q of the active controller is no longer met; and/or
- the preference PREF has changed; and/or
- a re-selection of the active controller is requested; and/or
- a predetermined trigger event occurs.

**Reference Signs**

| 10 | Control system |
|---|---|
| 12 | thermal installation or water heating and/or cooling installation |
| 14 | determination device |
| 16 | sensor |
| 18 | plurality of controllers |
| 20 | first controller |
| 22 | second controller |
| 23 | activable controller |
| 24 | selection module |
| 26 | memory |
| 28 | first sub-module |
| 30 | second sub-module |
| 32 | heating and/or cooling device |
| 34 | water distribution system |
| 36 | water inlet |
| 38 | water outlet |
| 40 | heat pump |
| 42 | compressor |
| 44 | additional heating element |
| 46 | additional heating and/or cooling system |
| 48 | additional determination device |
| 50 | storage tank |
| 52 | electrical heater |
| 54 | heat exchanger |
| 56 | additional determination device |
| 58 | water tank |
| 60 | pump |
| P | parameter |
| PT | parameter over time |
| PREF | preference |
| PP | predicted performance |
| Q | activation condition |
| X | plurality of controllers |
| Y | set of activable controllers |
| Δta | predetermined period of time from start of 12 |
| Δtb | predetermined period of time from activation of 18 |

**Claims**

1. Control system (10) for controlling at least one thermal installation (12), the control system (10) comprising

    - a determination device (14), in particular a sensor, configured for determining at least one parameter (P) relating to the thermal installation (12),

    **characterized in that** the control system (10) comprises

        - a plurality of controllers (18), each controller of the plurality of controllers (18) configured to control the thermal installation (12), the plurality of controllers (18) including

> o at least a first controller (20) and at least a second controller (22), and
> o a selection module (24) configured to enable a controller from the plurality of controllers (18) and/or select and set active a controller from the plurality of controllers (18) to control the thermal installation (12) or of a part thereof.

2.  Control system (10) of claim 1, **characterized in that** it comprises a memory (26) configured to record the determined parameter over time (PT).

3.  Control system (10) according to claim 1 or claim 2, **characterized in that**

> a) the selection module (24) is configured to determine a set of activable controllers (23) from the plurality of controllers (18), based, at least in part, on the determined parameter (P) and/or the recorded determined parameter over time (PT) and/or
> b) the selection module (24) can enable a controller from the plurality of controllers (18) to be in a learning mode and/or a monitoring mode and/or a data processing mode.

4.  Control system (10) according to any one of the preceding claims, **characterized in that** the set of activable controllers (23) includes at least the first controller (20).

5.  Control system (10) according to claim 3 or claim 4, **characterized in that** the selection module (24) is configured to select the controller to be set active from the set of activable controllers (23).

6.  Control system (10) according to claim 5, **characterized in that** the selection module (24) is configured to select the controller to be set active based, at least in part,

> - on a preference (PREF) and/or
> - on a predicted performance (PP) measure of the thermal installation (12) when using the selected controller.

7.  Control system (10) according to any one of the claims 3 to 6, **characterized in that** the selection module (24) is configured to determine the set of activable controllers (23) based, at least in part, on determining whether the parameter (P) and/or the recorded determined parameter over time (PT) meets an activation condition (Q) of a controller to be included in the set of activable controllers (23).

8.  Control system (10) according to any one of the preceding claims, **characterized in that**

> a) the first controller (20) is set active when the thermal installation (12) is started and/or
> b) the first controller (20) is set active and the second controller (22) is inactive and/or
> c) the first controller (20) is set active and the second controller (22) is inactive and enabled and/or
> d) the first controller (20) is set active and enabled and the second controller (22) is inactive and/or
> e) the first controller (20) is set active and enabled and the second controller (22) is inactive and enabled.

9.  Control system (10) according to any one of the preceding claims, **characterized in that** the selection module (24) is configured to select and set active a controller from the plurality of activable controllers (23) when

> - a predetermined period of time ($\Delta t12$) has lapsed since the thermal installation (12) was started; and/or
> - a predetermined period of time ($\Delta t18$) has lapsed since setting active and/or enabling a controller; and/or
> - the activation condition (Q) of the active controller is no longer met; and/or
> - the preference (PREF) has changed; and/or
> - a re-selection of the active controller is requested; and/or
> - a predetermined trigger event occurs; and/or

> **characterized in that** the selection module (24) is configured to determine the set of activable controllers (23) from the plurality of controllers (18) when

> - a predetermined period of time ($\Delta t12$) has lapsed since the thermal installation (12) was started,
> - a predetermined period of time ($\Delta t18$) has lapsed since determining the activable controllers (23); and/or
> - the activation condition (Q) of the controller is no longer met; and/or
> - a predetermined trigger event occurs; and/or
> - a re-determination of the activable controllers (23) is requested.

10. Control system (10) according to any one of the preceding claims,
**characterized in that** the selection module (24) comprises two sub-modules,

- a first sub-module (28) configured to select and set active a controller from the plurality of activable controllers (23) and/or configured to enable a controller from the plurality of controllers (18), and
- a second sub-module (30) configured to determine the set of activable controllers (23) from the plurality of controllers (18).

11. Control system (10) according to any one of the preceding claims,
**characterized in that** the selection module (24) is configured to pause the set active controller during an override procedure.

12. Control system (10) according to claim 11,
**Characterized in that** the override procedure is activated by a triggering event, by a request, at predetermined times, and/or at predetermined intervals.

13. Thermal installation (12) comprising a control system (10) of any one of the preceding claims, the thermal installation (12) further comprising at least one heating and/or cooling device (32) connected to a water distribution system (34) through a water inlet (36) and a water outlet (38), wherein the determination device (14) comprises at least one temperature, volume, flowrate and/or energy determination device (14), configured to determine the distributed water temperature at the water inlet (36) and/or at the water outlet (38) and/or the water temperature inside the heating and/or cooling device (32).

14. The thermal installation (12) of claim 13,
**characterized in that** the at least one heating and/or cooling device (32) comprises

- a heat pump (40) with a variable or fixed-speed compressor (42), and/or
- an additional heating element (44) comprising an electrical heater (52) and/or
- a heat exchanger (54) in fluid communication with an additional heating and/or cooling system (46).

15. The Thermal installation (12) of claim 13 or claim 14,
**characterized in that** the determination device (14) further comprises at least one additional determination device configured to determine a temperature of the distributed water, water flow volume of the distributed water, water energy of the distributed water, physical temperature outside the system, consumed water flow rate of the distributed water, consumed water flow volume of the distributed water, and/or the temperature of water inside of a storage tank (50) in fluid communication with the at least one heating and/or cooling device (32).

**Fig.1**

**Fig.2**

# EUROPEAN SEARCH REPORT

Europäisches
Patentamt
European
Patent Office
Office européen
des brevets

**Application Number**

EP 24 19 2528

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | CN 113 357 695 A (GUIZHOU ZHONGYIDA TECH CO LTD) 7 September 2021 (2021-09-07) | 1-12 | INV. F24D19/10 |
| Y | * paragraph [0017] - paragraph [0019]; figures 1-10 * | 13-15 | F24H1/18 F24H4/04 G05B9/03 |
| X | EP 3 339 752 A1 (DANFOSS AS [DK]) 27 June 2018 (2018-06-27) | 1-12 | G05B15/02 G05D23/19 |
| Y | * paragraph [0007] - paragraph [0031]; claims 1,2,5; figure 1 * | 13-15 | H01H47/00 |
| X | CN 116 045 355 A (AUTOMATION RES AND DESIGN INSTITUTE OF METALLURGICAL INDUSTRY CO LTD E) 2 May 2023 (2023-05-02) * the whole document * | 1 | |
| Y | EP 2 629 020 B1 (DAIKIN EUROPE NV [BE]) 26 May 2021 (2021-05-26) * paragraph [0018] - paragraph [0037]; figure 1 * | 13-15 | |

**TECHNICAL FIELDS SEARCHED (IPC)**

F24D
F24H
H01H

The present search report has been drawn up for all claims

| Place of search | Date of completion of the search | Examiner |
|---|---|---|
| Munich | 17 January 2025 | Ast, Gabor |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

.............................................................................................
& : member of the same patent family, corresponding
    document

EPO FORM 1503 03.82 (P04C01)

## ANNEX TO THE EUROPEAN SEARCH REPORT
## ON EUROPEAN PATENT APPLICATION NO.

EP 24 19 2528

This annex lists the patent family members relating to the patent documents cited in the above-mentioned European search report.
The members are as contained in the European Patent Office EDP file on
The European Patent Office is in no way liable for these particulars which are merely given for the purpose of information.

17-01-2025

| Patent document cited in search report | | Publication date | Patent family member(s) | | Publication date |
|---|---|---|---|---|---|
| CN 113357695 | A | 07-09-2021 | NONE | | |
| EP 3339752 | A1 | 27-06-2018 | EP | 3339752 A1 | 27-06-2018 |
| | | | PL | 3339752 T3 | 29-11-2019 |
| | | | RU | 2671139 C1 | 29-10-2018 |
| CN 116045355 | A | 02-05-2023 | NONE | | |
| EP 2629020 | B1 | 26-05-2021 | DE | 102012202375 A1 | 22-08-2013 |
| | | | EP | 2629020 A2 | 21-08-2013 |

EPO FORM P0459

For more details about this annex : see Official Journal of the European Patent Office, No. 12/82